# DEMANDE DE BREVET EUROPEEN

(11) **EP 1 529 973 A2**
(43) Date de publication de la demande: **11.05.2005**
(21) Numéro de dépôt: 04292112.2
(22) Date de dépôt: 01.09.2004
(51) Int. Cl.: F16C 11/10

(54) **Dispositif d'articulation à rotule**

(30) Priorité: 04.11.2003 FR 0312926
(71) Demandeur: Peugeot Citroen Automobiles S.A., 78140 Vélizy Villacoublay (FR)
(72) Inventeur: Le Du, Pierre, 35310 Chavagne (FR)
(74) Mandataire: Thinat, Michel

(57) **Abrégé**

La présente invention concerne un dispositif d'articulation à rotule d'au moins l'une des extrémités d'un vérin à un ouvrant ou un support de l'ouvrant entre lesquels est disposé le vérin.

Le dispositif est caractérisé en ce qu'il comprend une calotte sphérique (10) réalisée dans une caisse (3) d'un véhicule automobile et apte à recevoir une partie sphérique (11) solidaire de l'extrémité du vérin (1) dont l'extrémité opposée est reliée articulée au hayon (2) constituant l'ouvrant et la partie (11) comporte un moyen de verrouillage (12) à la calotte sphérique (10).

L'invention trouve application dans le domaine de l'automobile et plus généralement dans tout système comportant un vérin dont l'une au moins des extrémités est articulée.

## Description

La présente invention concerne un dispositif d'articulation à rotule d'au moins l'une des extrémités d'un vérin à un ouvrant ou un support de l'ouvrant entre lesquels est disposé le vérin.

Elle s'applique en particulier mais de manière non limitative à un hayon d'un véhicule automobile articulé à la caisse du véhicule ou à une lunette articulée au hayon du véhicule.

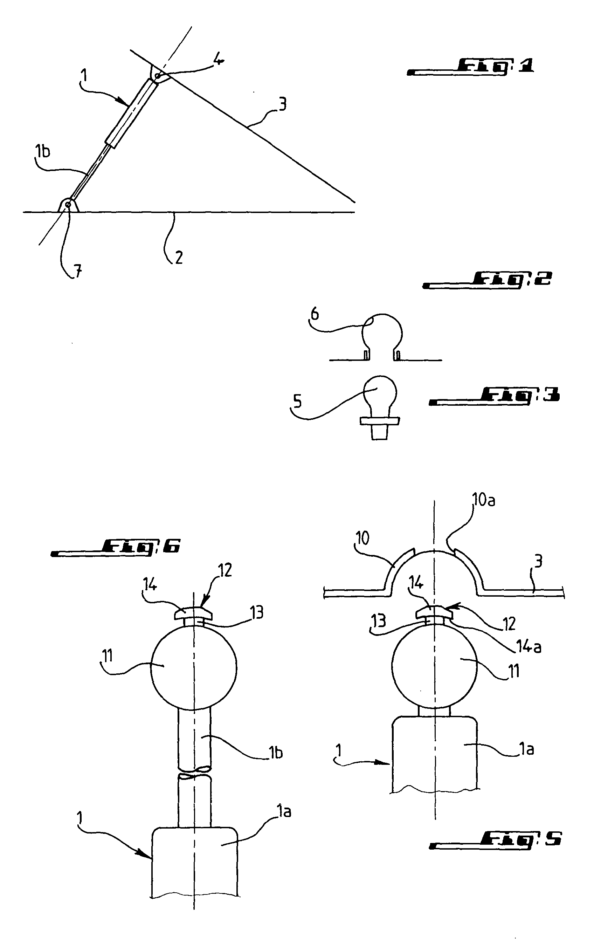

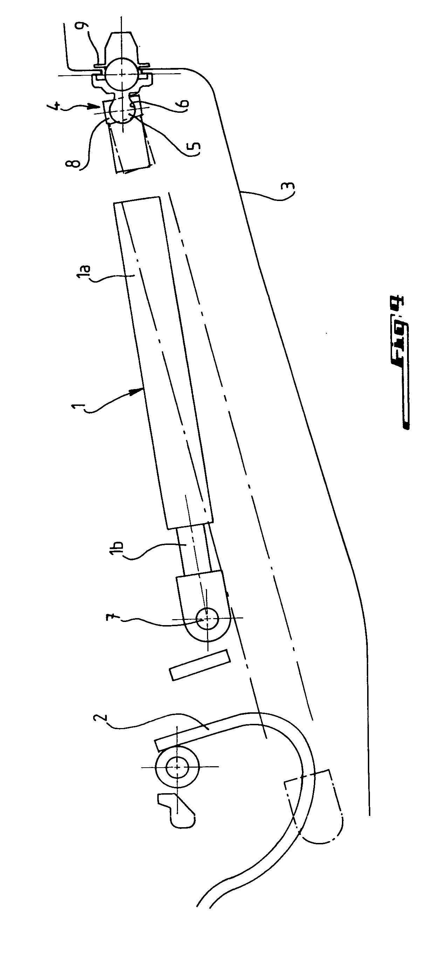

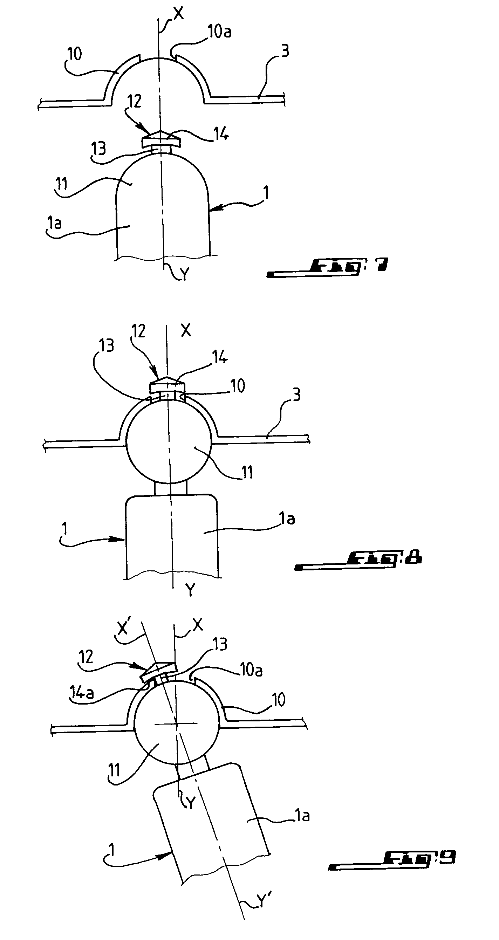

Les figures 1 à 4 représentent un dispositif d'articulation d'un vérin ou d'une béquille 1 monté articulé entre un ouvrant 2 tel que le hayon d'un véhicule automobile, et le support 3 de l'ouvrant 2, tel que la caisse du véhicule, et auquel est articulé l'ouvrant 2.

Au moins l'une des extrémités du vérin 1, par exemple celle du cylindre ou corps la de ce vérin, est reliée à la caisse 3 du véhicule par une articulation à rotule 4 dont la partie mâle de rotule 5 est solidaire de la caisse 3 et la partie femelle de rotule 6 est solidaire du corps de vérin la ou réciproquement. L'autre extrémité du vérin, par exemple l'extrémité de la tige de vérin 1b, peut être reliée au hayon 2 par un axe d'articulation 7 ou par une articulation à rotule identique à l'articulation à rotule 4 du corps de vérin la à la caisse 3 du véhicule.

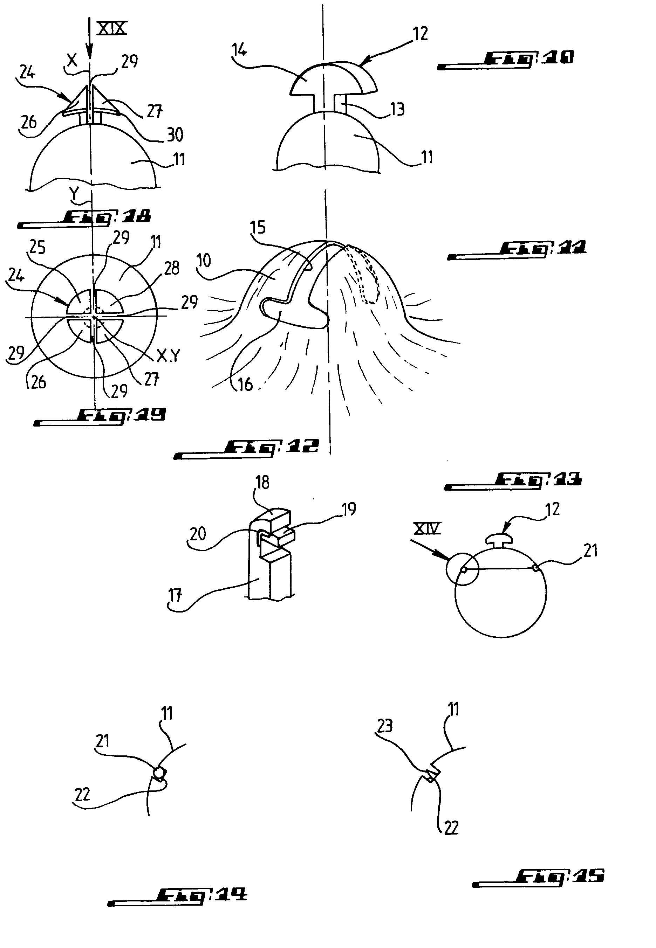

Cependant, comme cela ressort mieux du dispositif d'articulation à rotule 4 de la figure 4, l'articulation nécessite l'utilisation d'une pièce 8 rapportée au corps de vérin 1a et d'un circlip extérieur 9 pour verrouiller le moyen de fixation de l'articulation à rotule 4 à la caisse 3 du véhicule. Ceci se traduit par une articulation à rotule relativement complexe et un accroissement du temps de montage en usine.

La présente invention a pour but d'éliminer l'inconvénient ci-dessus en proposant un dispositif d'articulation à rotule d'au moins l'une des extrémités d'un vérin à un ouvrant ou un support de l'ouvrant entre lesquels est disposé le vérin, et qui est caractérisé en ce qu'il comprend une calotte sphérique réalisée dans l'ouvrant ou le support de l'ouvrant et apte à recevoir une partie sphérique solidaire de l'extrémité du vérin et en ce que la partie sphérique comporte à son extrémité libre un moyen de verrouillage à la calotte sphérique autorisant des mouvements de rotation de la partie sphérique dans la calotte sphérique suivant les débattements du vérin.

Avantageusement, le moyen de verrouillage présente en section transversale sensiblement une forme en T dont la jambe est solidaire de l'extrémité de la partie sphérique du vérin suivant l'axe longitudinal de celui-ci et traverse un passage réalisé au sommet de la calotte sphérique, et la tête a au moins une partie de sa surface inférieure recouvrant une partie correspondante de bord du passage de la calotte sphérique en position montée du vérin.

Le passage de la jambe du moyen de verrouillage en forme de T comprend une lumière arquée réalisée à travers la paroi de la calotte sphérique pour assurer le guidage du moyen de verrouillage lors des débattements du vérin et un trou réalisé à travers la paroi de la calotte sphérique à l'une des extrémités de la lumière arquée transversalement à celle-ci et permettant l'introduction de la tête du moyen de verrouillage au travers de la paroi de la calotte.

L'autre extrémité du vérin est également reliée à l'ouvrant ou au support de l'ouvrant par une articulation à rotule comprenant une calotte sphérique réalisée dans l'ouvrant ou le support de l'ouvrant et apte à recevoir une partie sphérique solidaire de cette extrémité du vérin et la partie sphérique comporte à son extrémité libre un moyen de verrouillage à la calotte sphérique autorisant des mouvements de rotation de la partie sphérique dans la calotte sphérique suivant les débattements du vérin, le moyen de verrouillage comprenant au moins une aile latérale rétractable pouvant s'effacer élastiquement lors de l'introduction du moyen de verrouillage au travers d'un passage de la calotte sphérique et revenir à une position en saillie recouvrant une partie correspondante de bord du passage de la calotte.

Le moyen de verrouillage comprend un téton solidaire de l'extrémité de la partie sphérique du vérin suivant l'axe longitudinal de celui-ci et ayant son extrémité libre en forme de crochet recourbé sensiblement à angle droit dans lequel est logée l'aile rétractable de verrouillage faisant saillie de cette extrémité et étant rappelée élastiquement sur celle-ci par un organe de rappel élastique.

L'organe élastique est constitué par une lamelle flexible recourbée sensiblement à angle droit, dont une extrémité est solidaire du téton le long de celui-ci et l'extrémité opposée est solidaire de l'extrémité de l'aile opposée à son extrémité libre faisant saillie du crochet du téton.

Selon une autre variante de réalisation, l'autre extrémité du vérin est également reliée à l'ouvrant ou au support de l'ouvrant par une articulation à rotule comprenant une calotte sphérique réalisée dans l'ouvrant ou le support de l'ouvrant et apte à recevoir une partie sphérique solidaire de cette extrémité du vérin et la partie sphérique comporte à son extrémité libre un moyen de verrouillage à la calotte sphérique autorisant des mouvements de rotation de la partie sphérique dans la calotte suivant les débattements du vérin, le moyen de verrouillage comprenant une tête tronconique fendue en quatre secteurs tronconiques identiques pouvant être rapprochés élastiquement les uns des autres lors de l'introduction de la tête au travers d'un passage de la calotte sphérique et revenir à leur position initiale de manière à recouvrir une partie correspondante de bord du passage de la calotte.

Lorsque la partie sphérique de l'extrémité du vérin est métallique, un joint torique d'étanchéité est logé dans une gorge conjuguée de la partie sphérique.

Lorsque la partie sphérique de l'extrémité du vérin est en une matière plastique, un joint torique à lèvre d'étanchéité est logé dans une gorge conjuguée de la partie sphérique.

La partie sphérique, complète ou partielle, est intégrée à l'extrémité de la tige du vérin ou du cylindre du vérin.

Selon une variante de réalisation, la partie sphérique est partielle de forme hémisphérique et intégrée au corps du vérin à l'extrémité de celui-ci.

De préférence, la calotte est hémisphérique et réalisée par emboutissage.

L'ouvrant peut être un hayon d'un véhicule automobile articulé à la caisse de ce dernier constituant le support du hayon ou une lunette articulée au hayon du véhicule constituant le support de la lunette.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention et dans lesquels :
- La figure 1 est une vue schématique d'un vérin monté articulé entre un ouvrant et un support de ce dernier ;
- Les figures 2 et 3 représentent des parties femelle et mâle d'une articulation à rotule pouvant être utilisée pour le vérin de la figure 1 ;
- La figure 4 représente de façon détaillée un vérin monté articulé entre une lunette d'un hayon de véhicule automobile et la caisse de celui-ci ;
- La figure 5 représente une articulation à rotule de l'invention associée à l'extrémité du corps d'un vérin ;
- La figure 6 représente une partie de l'articulation de l'invention associée à l'extrémité de la tige d'un vérin ;
- La figure 7 représente une articulation à rotule de l'invention, dont une partie est intégrée au corps du vérin ;
- Les figures 8 et 9 représentent le procédé de montage de l'articulation à rotule de l'invention ;
- Les figures 10 et 11 représentent une variante de réalisation de l'articulation à rotule de l'invention ;
- La figure 12 représente une variante de réalisation d'un moyen de verrouillage d'une extrémité du vérin à l'ouvrant ou au support de cet ouvrant ;
- La figure 13 représente une partie sphérique de l'articulation à rotule de l'invention munie d'un joint torique d'étanchéité ;
- La figure 14 est une vue agrandie de la partie cerclé XIV de la figure 13 ;
- La figure 15 est une vue agrandie semblable à celle de la figure 14 représentant une variante de réalisation du joint torique d'étanchéité ;
- Les figures 16 et 17 représentent le procédé de montage d'un vérin à articulation de l'invention entre la caisse d'un véhicule et la lunette montée articulée au hayon de ce véhicule ;
- La figure 18 représente une autre variante de réalisation d'un moyen de verrouillage d'une extrémité du vérin à l'ouvrant ou au support de cet ouvrant ; et
- La figure 19 est une vue de dessus suivant la flèche XIX de la figure 18.

Le dispositif d'articulation d'un vérin ou d'une béquille va être décrit dans l'application à une lunette montée articulée au hayon d'un véhicule automobile, mais il est bien entendu qu'il peut s'appliquer également au hayon du véhicule ou à tout autre ouvrant devant nécessiter une assistance notamment à l'ouverture de celui-ci.

Les éléments ou composants du dispositif d'articulation de l'invention identiques ou semblables à ceux du dispositif des figures 1 à 4 portent les mêmes références.

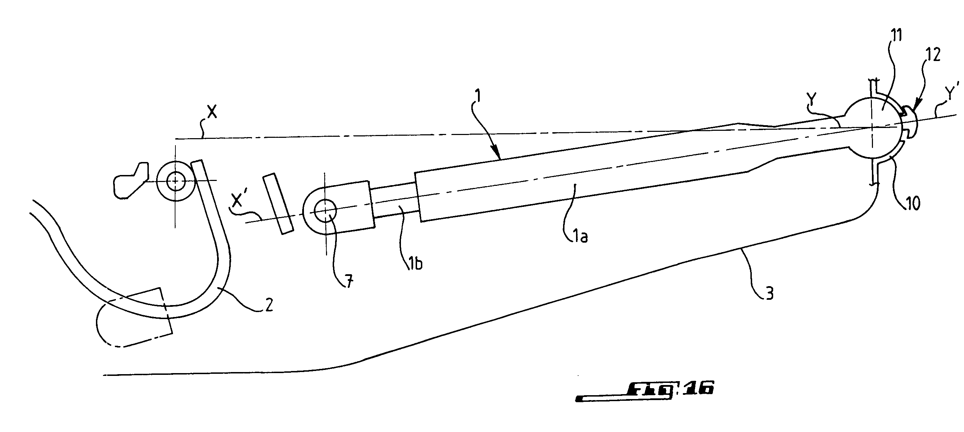

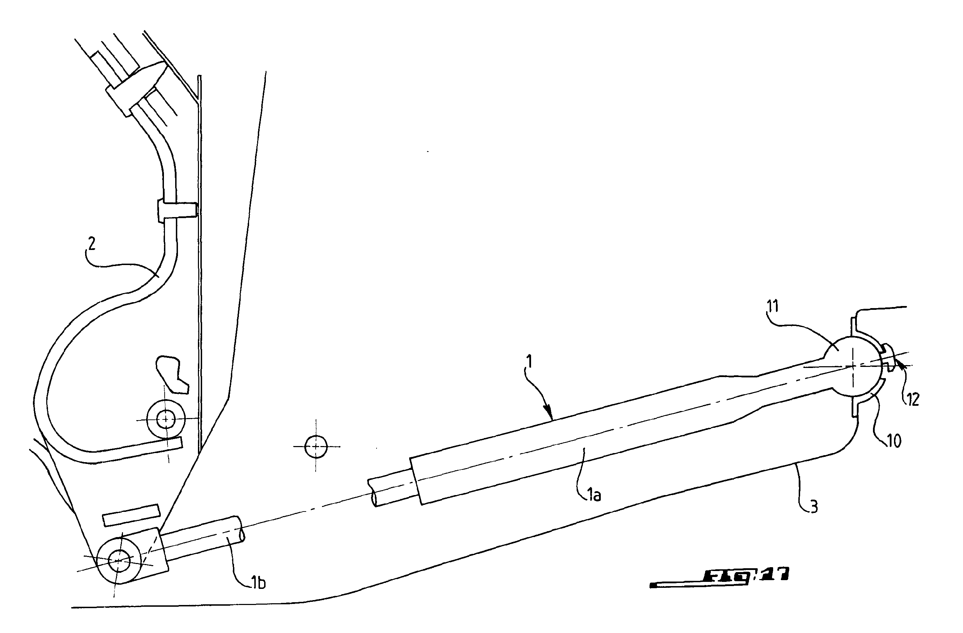

En se reportant tout d'abord aux figures 5 et 6, le dispositif d'articulation à rotule de l'invention comprend une calotte sphérique 10, de préférence hémisphérique, réalisée par emboutissage dans la caisse 3 du véhicule, étant bien entendu que la calotte 10 peut être réalisée par emboutissage dans la lunette 2 du véhicule.

Le dispositif d'articulation à rotule comprend en outre une partie sphérique complète 11 solidaire de l'extrémité du corps 1a du vérin 1 comme représenté en figure 5 ou de l'extrémité de la tige de vérin 1b comme représenté en figure 6, et pouvant s'engager dans la calotte sphérique 10 pour permettre à la partie sphérique 11 de tourner dans cette calotte lors des débattements du vérin 1. Les figures 5 et 6 montrent que la partie sphérique 11 est rajoutée au corps 1a ou à la tige 1b du vérin 1, qui peut être de type standard, mais la partie sphérique 11 peut être directement intégrée à l'extrémité du corps 1a du vérin 1 comme représenté en figure 7 qui montre que la partie 11 est alors hémisphérique.

Pour assurer le maintien de la partie sphérique 11 dans la calotte 10 lors des débattements du vérin 1, un moyen de verrouillage 12 est prévu solidaire de l'extrémité de la partie 11. Ce moyen de verrouillage est constitué dans cet exemple par un élément cylindrique en forme de champignon, de section approximativement en forme de T dont la jambe 13 est solidaire de l'extrémité de la partie sphérique 11 du vérin 1 suivant l'axe longitudinal de ce dernier et traverse un orifice ou passage circulaire 10a réalisé au sommet de la calotte 10. La tête 14 du moyen de verrouillage 12, de diamètre inférieur au diamètre du passage 10a en considérant notamment la figure 5, traverse également le passage 10a et, en position montée du vérin 1, a sa partie inférieure 14a disposée au-dessus de la partie de bord correspondante du passage 10a de la calotte 10 en recouvrant cette partie. Ainsi, l'extrémité du vérin 1 portant la partie sphérique 11 est verrouillée à la calotte 10 pour s'opposer aux efforts dirigés dans le sens longitudinal du vérin 1 allant de la calotte 10 à l'autre extrémité opposée articulée du vérin 1.

Le montage de l'extrémité articulée du vérin 1 dans la calotte 10 s'effectue comme représenté aux figures 8 et 9. Selon la figure 8, l'extrémité du vérin 1 est engagée suivant l'axe XY de manière que la partie sphérique 11 soit reçue par la calotte 10 et le moyen de verrouillage 12 soit engagé au travers du passage 10a. Ensuite, l'extrémité articulée opposée du vérin 1 est fixée à la lunette 2 ou à la caisse 3 du véhicule une fois la partie sphérique 11 logée dans la calotte 10 du hayon, ce qui provoque par construction l'inclinaison du vérin 1 suivant l'axe X'Y' par rapport à l'axe XY comme représenté en figure 9 qui montre que la surface inférieure 14a de la tête 14 du moyen de verrouillage 12 s'est déplacée pour recouvrir la partie de bord correspondante du passage 10a de la calotte 10, verrouillant ainsi la partie sphérique 11 à la calotte 10.

La figure 16 représente le vérin 1 à une position intermédiaire d'ouverture de la lunette 2 où l'axe X'Y' du vérin 1 est incliné par rapport à l'axe XY d'introduction de l'extrémité articulée du vérin 1 dans la calotte 10. La figure 17 représente ce même vérin en position d'ouverture complète de la lunette et à laquelle la tête 14 du moyen de verrouillage 12 est à sa position maximum de verrouillage au-dessus de la partie de bord correspondante du passage 10a.

Le démontage du vérin 1 s'effectue par les opérations inverses, c'est-à-dire qu'après avoir démonté l'articulation de ce vérin opposée à celle à partie sphérique 11 et calotte 10, il suffit de déplacer le corps du vérin 1 de manière que son axe longitudinal se trouve sensiblement confondu avec l'axe XY pour permettre le déverrouillage du moyen 12 et, par conséquent, le retrait de la partie sphérique 11 de la calotte 10.

Les parties 11 des figures 5 et 6 ont été représentées comme étant constituées par une sphère complète, mais elles peuvent être constituées par une partie hémisphérique.

Dans le cas de débattements relativement importants du vérin 1 pour l'ouverture et la fermeture de l'ouvrant se traduisant par une rotation relativement importante de la partie sphérique 11 dans la calotte 10, cette dernière, comme représenté en figure 11, comprend une lumière arquée 15 réalisée à travers la paroi de la calotte sphérique 10 de part et d'autre du sommet de celle-ci et d'une largeur assurant le guidage suivant sa direction de la jambe 13 du moyen de verrouillage 12 de la figure 10 présentant une forme générale en champignon, mais présentant deux faces parallèles cette fois. Pour permettre l'engagement de la tête 14 du moyen 12 au travers de la calotte 10 et, par conséquent, l'engagement de la jambe 13 dans la lumière arquée 15, un trou oblong 16 est réalisé à l'une des extrémités de la lumière 15 au travers de la paroi de la calotte 10 et transversalement à la lumière 15. Le trou oblong 16 est de dimension supérieure à celle de la tête 14 du moyen 12 pour permettre son introduction au travers de la calotte 10 et les branches latérales de la tête 14 permettent le verrouillage de l'extrémité correspondante du vérin à la calotte 10. On notera que dans ce cas, la tête 14 peut être également de forme sphérique, la forme et les dimensions du trou 16 étant adaptées en conséquence.

Bien que cela ne soit pas représenté aux figures, l'autre extrémité du vérin 1 peut également être pourvue d'une articulation à rotule du genre décrit précédemment.

Cependant, pour permettre le montage et le verrouillage de l'extrémité du vérin à partie sphérique 11 logée dans la calotte 10, cette autre extrémité du vérin 1 comporte un téton 17 représenté en figure 12, solidaire de l'extrémité de la partie sphérique 11 du vérin 1 en s'étendant suivant l'axe longitudinal de ce dernier et ayant son extrémité libre 18 en forme de crochet recourbé sensiblement à angle droit dans lequel est logée une pièce formant aile rétractable 19 en forme de parallélépipède rectangle faisant saillie latéralement du crochet 18 et du téton 17.

L'aile 19 est maintenue dans le crochet 18 du téton 17 par une lamelle flexible 20 recourbée sensiblement à angle droit, dont une extrémité est solidaire du téton 17 le long de celui-ci et son extrémité opposée est solidaire de l'extrémité de l'aile 19 opposée à son extrémité libre faisant saillie du crochet 18 du téton 17. Ainsi, en position normale représentée en figure 12, l'aile 19 est maintenue en partie en appui sous le crochet 18 perpendiculairement au téton 17 et l'aile 19 peut être déplacée vers le bas par rapport à la figure 12 à l'encontre de la force élastique de rappel de la lamelle 20 qui peut être réalisée en acier.

Le montage du vérin 1 pourvu à ses deux extrémités d'articulations à rotules décrites précédemment s'effectue alors comme suit.

Le vérin 1 est présenté en face de la calotte 10 destinée à recevoir la partie sphérique 11 comportant le téton 17 et en engageant le téton 17 au travers de l'ouverture ou du passage 10a de la calotte 10, l'aile 19 est effacée par le bord correspondant de l'ouverture 10 en la rabattant dans le crochet 18 à l'encontre de la force de rappel de la lamelle 20, de manière à permettre l'introduction du téton 17 au travers du passage 10a de la calotte 10. Une fois le téton 17 introduit dans ce passage, la lamelle 20 ramène élastiquement l'aile 19 à sa position représentée en figure 12 à laquelle elle recouvre la partie de bord correspondante du passage 10a de manière à verrouiller la partie sphérique 11 de l'extrémité correspondante du vérin 1 à la calotte 10. Ensuite, le corps du vérin peut être déplacé pour engager la partie sphérique 11 de l'autre extrémité de celui-ci dans la calotte correspondante 10.

Les figures 18 et 19 représentent une variante de réalisation d'un moyen de verrouillage de l'extrémité du vérin opposée à celle représentée à la figure 5 ou 6. Selon cette variante de réalisation, l'autre extrémité du vérin 1 comprend une tête 24 de forme tronconique solidaire de l'extrémité de la partie sphérique 11 du vérin 1 en s'étendant suivant l'axe longitudinal de ce dernier. La tête 24 est fendue en quatre secteurs identiques 25 à 28 comme cela ressort mieux de la figure 19 et séparés les uns des autres par des fentes en croix 29 disposées à angle droit les unes relativement aux autres. De la sorte, les secteurs tronconiques 25 à 28 peuvent être rapprochés élastiquement les uns des autres vers l'axe central de symétrie X-Y. Le cas échéant, la matière constituant les quatre secteurs tronconiques peut être élastiquement déformable notamment au niveau des extrémités inférieures de ces secteurs définissant la partie de plus grand diamètre 30.

Le montage de la deuxième extrémité du vérin 1 ainsi conçue s'effectue comme suit. Cette deuxième extrémité est présentée en face de la calotte 10 destinée à recevoir la partie sphérique 11 comportant la tête tronconique 24. La partie de plus grand diamètre 30 de la tête 24 étant supérieure au diamètre du passage 10a de la calotte 10, l'introduction de la tête 24 dans le passage 10a se traduit par l'exercice d'une force faisant fléchir de manière concentrique les quatre secteurs tronconiques 25-28 les uns vers les autres, diminuant ainsi ce diamètre et permettant à la tête de passer au travers du passage 10a de la calotte 10. Après avoir franchi ce passage, les quatre secteurs tronconiques 25-28 de la tête 24 reprennent élastiquement leur position initiale de manière à recouvrir le bord circulaire correspondant du passage 10a de la calotte 10 et garantir ainsi le verrouillage de la deuxième extrémité du vérin 1 à la calotte 10.

Les figures 13 et 14 représentent la partie sphérique 11 seule pourvue d'un joint torique d'étanchéité 21 logé dans une gorge conjuguée 22 et réalisée dans la partie sphérique 11 lorsque cette dernière est métallique. Dans le cas où la partie sphérique 11 est en une matière plastique ou composite, il est possible de remplacer le joint torique 21 par un joint torique à lèvre 23 comme représenté en figure 15.

Le dispositif d'articulation de l'invention simplifie considérablement le montage du vérin par rapport aux dispositifs connus comme celui représenté notamment en figure 4 et nécessite moins de composants.

## Revendications

1. Dispositif d'articulation à rotule d'au moins l'une des extrémités d'un vérin (1) à un ouvrant (2) ou un support (3) de l'ouvrant entre lesquels est disposé le vérin (1), **caractérisé en ce qu'**il comprend une calotte sphérique (10) réalisée dans l'ouvrant (2) ou le support (3) de l'ouvrant et apte à recevoir une partie sphérique (11) solidaire de l'extrémité du vérin (1) et **en ce que** la partie sphérique (11) comporte à son extrémité libre un moyen (12) de verrouillage à la calotte sphérique (10) autorisant des mouvements de rotation de la partie sphérique (11) dans la calotte sphérique (10) suivant les débattements du vérin (1).

2. Dispositif selon la revendication 1, **caractérisé en ce que** le moyen de verrouillage (12) présente en section transversale sensiblement une forme en T dont la jambe (13) est solidaire de l'extrémité de la partie sphérique (11) du vérin (1) suivant l'axe longitudinal de celui-ci et traverse un passage (10a) réalisé au sommet de la calotte sphérique (10), et la tête (14) a au moins une partie de sa surface inférieure (14a) recouvrant une partie correspondante de bord du passage (10a) de la calotte sphérique (10) en position montée du vérin (1).

3. Dispositif selon la revendication 2, **caractérisé en ce que** le passage (10a) de la jambe (13) du moyen de verrouillage (12) en forme de T comprend une lumière arquée (15) réalisée à travers la paroi de la calotte sphérique (10) pour assurer le guidage du moyen de verrouillage (12) lors des débattements du vérin (1) et un trou (16) réalisé à travers la paroi de la calotte sphérique (10) à l'une des extrémités de la lumière arquée (15) transversalement à celle-ci et permettant l'introduction de la tête (14) du moyen de verrouillage (12) au travers de la paroi de la calotte (10).

4. Dispositif selon l'une des revendications précédentes, **caractérisé en ce que** l'autre extrémité du vérin (1) est également reliée à l'ouvrant (2) ou au support (3) de l'ouvrant par une articulation à rotule comprenant une calotte sphérique (10) réalisée dans l'ouvrant (2) ou le support (3) de l'ouvrant et apte à recevoir une partie sphérique (11) solidaire de cette extrémité du vérin (1) et **en ce que** la partie sphérique (11) comporte à son extrémité libre un moyen de verrouillage (12) à la calotte sphérique (10) autorisant des mouvements de rotation de la partie sphérique (11) dans la calotte sphérique (10) suivant les débattements du vérin (1), le moyen de verrouillage (12) comprenant au moins une aile latérale rétractable (19) pouvant s'effacer élastiquement lors de l'introduction du moyen de verrouillage (12) au travers d'un passage (10a) de la calotte sphérique (10) et revenir à une position en saillie recouvrant une partie correspondante de bord du passage (10a) de la calotte (10).

5. Dispositif selon la revendication 4, **caractérisé en ce que** le moyen de verrouillage (12) comprend un téton (17) solidaire de l'extrémité de la partie sphérique (11) du vérin (1) suivant l'axe longitudinal de celui-ci et ayant son extrémité libre en forme de crochet (18) recourbé sensiblement à angle droit dans lequel est logée l'aile rétractable de verrouillage (19) faisant saillie de cette extrémité et étant rappelée élastiquement sur celle-ci par un organe de rappel élastique (20).

6. Dispositif selon la revendication 5, **caractérisé en ce que** l'organe élastique est constitué par une lamelle flexible (20) recourbée sensiblement à angle droit, dont une extrémité est solidaire du téton (17) le long de celui-ci et l'extrémité opposée est solidaire de l'extrémité de l'aile (19) opposée à son extrémité libre faisant saillie du crochet (18) du téton (17).

7. Dispositif selon l'une des revendications 1 à 3, **caractérisé en ce que** l'autre extrémité du vérin (1) est également reliée à l'ouvrant (2) ou au support (3) de l'ouvrant par une articulation à rotule comprenant une calotte sphérique (10) réalisée dans l'ouvrant (2) ou le support (3) de l'ouvrant et apte à recevoir une partie sphérique (11) solidaire de cette extrémité du vérin (1) et **en ce que** la partie sphérique (11) comporte à son extrémité libre un moyen de verrouillage (24) à la calotte sphérique (10) autorisant des mouvements de rotation de la partie sphérique (11) dans la calotte (10) suivant les débattements du vérin (1), le moyen de verrouillage (24) comprenant une tête tronconique fendue en quatre secteurs tronconiques identiques (25-28) pouvant être rapprochés élastiquement les uns des autres lors de l'introduction de la tête (24) au travers d'un passage (10a) de la calotte sphérique (10) et revenir à leur position initiale de manière à recouvrir une partie correspondante de bord du passage (10a) de la calotte (10).

8. Dispositif selon l'une des revendications précédentes, **caractérisé en ce que** la partie sphérique (11) de l'extrémité du vérin (1) est métallique et comprend un joint torique d'étanchéité (21) logé dans une gorge conjuguée (22) de la partie sphérique (11).

9. Dispositif selon l'une des revendications 1 à 7, **caractérisé en ce que** la partie sphérique (11) de l'extrémité du vérin (1) est en une matière plastique et comprend un joint torique à lèvre d'étanchéité (23) logé dans une gorge conjuguée (22) de la partie sphérique (11).

10. Dispositif selon l'une des revendications précédentes, **caractérisé en ce que** la partie sphérique (11), complète ou partielle, est intégrée à l'extrémité de la tige (1b) du vérin (1) ou du cylindre (1a) du vérin (1).

11. Dispositif selon l'une des revendications 1 à 9, **caractérisé en ce que** la partie sphérique (11) est partielle de forme hémisphérique et intégrée au corps (1a) du vérin (1) à l'extrémité de celui-ci.

12. Dispositif selon l'une des revendications précédentes, **caractérisé en ce que** la calotte (10) est hémisphérique et réalisée par emboutissage.

13. Dispositif selon l'une des revendications précédentes, **caractérisé en ce que** l'ouvrant est un hayon (2) d'un véhicule automobile articulé à la caisse (3) de ce dernier constituant le support du hayon ou une lunette articulée au hayon du véhicule constituant le support de la lunette.
